# EUROPÄISCHE PATENTSCHRIFT

(11) **EP 0 512 271 B1**
(45) Veröffentlichungstag und Bekanntmachung des Hinweises auf die Patenterteilung: **27.07.1994**
(21) Anmeldenummer: 92106035.6
(22) Anmeldetag: 08.04.1992
(51) Int. Cl.: A47J 36/02, A47J 27/00, C23D 5/00, C23D 11/00, B23K 20/02

(54) **Verfahren zur Herstellung eines Koch- oder Gargerätes mit dekorativer und/oder technischer Emaillierung auf dem Mantel**
Method to produce a cooking vessel with a decorative or technical enamel coating on its jacket
Procédé de production d'un récipient de cuisson à émaillage décoratif ou technique sur sa paroi

(30) Priorität: 09.05.1991 DE 4115173
(43) Veröffentlichungstag der Anmeldung: 11.11.1992
(73) Patentinhaber: FISSLER GMBH, D-55715 Idar-Oberstein (DE)
(72) Erfinder: Fissler, Harald, Dipl.-Ing., W-6580 Idar-Oberstein (DE)
(74) Vertreter: Andrejewski, Walter

(56) Entgegenhaltungen:
- EP-A- 0 209 745
- DE-A- 2 751 414
- DE-B- 1 301 450
- FR-A- 2 002 555
- FR-A- 2 495 190
- US-A- 3 546 909

## Beschreibung

Die Erfindung betrifft ein Verfahren zur Herstellung eines Koch- oder Gargerätes mit Mantel mit Abdeckplatte oder angeformtem Boden aus nichtrostendem Stahl und Platine aus gut wärmeleitendem Werkstoff unter dem Topfboden, wobei das Aggregat aus Boden und Platine zentriert und in einer Schlagpresse mit Stempel und Matrize einer einfachen oder mehrfachen Impulspressung unterworfen sowie dadurch die Platine intermetallisch auf dem Boden verbunden wird, und wobei der Mantel zumindest bereichsweise mit einer dekorativen und/oder technischen, zum Beispiel kennzeichnenden, Emaillierung versehen wird, die als emaillierfähige Auflage auf den Mantel aufgebracht und als Emaille eingebrannt wird. Die emaillierfähige Auflage wird vorzugsweise mit Hilfe eines Emaillierbogens auf den Mantel aufgebracht. Die Platine kann von einer sogenannten Kapselabdeckung abgedeckt sein, die zumeist aus dem gleichen Werkstoff besteht wie das Koch- oder Gargerät und mit der Platine bei dem beschriebenen Arbeitsgang der Impulspressung ebenfalls intermetallisch verbunden wurde. Die Temperatur, bei der die Impulspressung durchgeführt wird, liegt im allgemeinen im Bereich von 600° C. Die Platine besteht beispielsweise aus Aluminium oder einer Kupferlegierung als gut wärmeleitfähigem Werkstoff. Emaillierungsbögen für die vorgegebene Zweckbestimmung sind in verschiedenen Ausführungsformen bekannt, und zwar mit verschiedenen Zusammensetzungen der emaillierfähigen Auflage und damit für Emaillierungen unterschiedlicher Zweckbestimmung und Emaillierungstemperatur. Die emaillierfähige Auflage befindet sich im allgemeinen auf einem Substrat, welches abziehfähig ist, nachdem die emaillierfähige Auflage auf den Mantel aufgebracht ist. Koch- und Gargeräte bezeichnet im Rahmen der Erfindung insbesondere Kochtöpfe, Brattöpfe, Bratpfannen und dergleichen, die einen Mantel aufweisen, der in der beschriebenen Weise mit einer Emaillierung versehen wird.

Bei dem aus der Praxis bekannten Verfahren, von dem die Erfindung ausgeht, erfolgt das Aufbringen der Emaillierung, einschließlich des sogenannten Einbrennens der emaillierfähigen Auflage, in einem besonderen Emaillierungsarbeitsgang, der den Maßnahmen, die der beschriebenen Herstellung der intermetallischen Verbindung dienen, zumindest vorgeschaltet, zuweilen aber auch nachgeschaltet ist. Die beschriebenen Maßnahmen zur Herstellung der intermetallischen Verbindung sind an sich bekannt (vgl. DE 22 58 795, EP 0 209 745). Die Auswahl der Zusammensetzung der emaillierfähigen Auflage erfolgt im Rahmen der bekannten Maßnahmen ohne Anpassung an die Verfahrensschritte, die für die Herstellung der intermetallischen Verbindung erforderlich sind. Die Tendenz der bekannten Maßnahmen geht dahin, mit einer Emaillierungstemperatur für die emaillierfähige Auflage zu arbeiten, die möglichst niedrig liegt.

Die beschriebenen bekannten Maßnahmen sind wegen des besonderen Emaillierungsarbeitsganges aufwendig. Wird der Emaillierungsarbeitsgang den Maßnahmen für die Herstellung der intermetallischen Verbindung vorgeschaltet, so stört, daß für die Emaillierung einerseits, die Durchführung der Maßnahmen zur intermetallischen Verbindung andererseits, separate Erwärmungen erfolgen. Wird die Emaillierung nachgeschaltet, so kann nicht immer ausgeschlossen werden, daß die zuvor eingerichtete intermetallische Verbindung Schaden nimmt.

Der Erfindung liegt die Aufgabe zugrunde, das eingangs beschriebene Verfahren so zu führen, daß für das Aufbringen der Emaillierung ein besonderer Verfahrensschritt mit besonderer Erwärmung auf eine vorgegebene Emaillierungstemperatur nicht mehr erforderlich ist.

Zur Lösung dieser Auflage lehrt die Erfindung, daß die emaillierfähige Auflage so ausgewählt wird, daß bei der nach dem Werkstoff der Platine eingestellten Temperatur die Emaillebildung stattfindet, daß diese emaillierfähige Auflage auf den gereinigten Mantel aufgebracht wird (ehe die Platine intermetallisch mit dem Boden verbunden wird), daß das Koch- oder Gargerät mit seiner emaillierfähigen Auflage auf die nach dem Werkstoff der Platine eingestellte Temperatur erwärmt wird und daß danach das Aggregat aus Boden und Platine ohne Zwischenabkühlung aus der gleichen Wärme heraus mit der bereits gebildeten dekorativen oder technischen Emaillierung der Impulspressung unterworfen wird. Ein Aufrauhen der zu emaillierenden Fläche oder ein egalisierendes Abschleifen können zweckmäßig sein. - Die Erfindung geht zunächst von der Erkenntnis aus, daß die Erwärmung, die erforderlich ist, um das Aggregat aus Boden und Platine sowie gegebenenfalls der Kapselabdeckung in der beschriebenen Weise intermetallisch zu verbinden, auch für das Einbrennen der Emaillierung eingesetzt werden kann. Erfindungsgemäß entfällt damit ein besonderer Verfahrensschritt für dieses Einbrennen der emaillierfähigen Auflage. Es wird insoweit in einer Wärme gearbeitet. Wird im Zusammenhang damit nach der Lehre der Erfindung die Zusammensetzung der emaillierfähigen Auflage so gewählt, daß bei der nach dem Werkstoff der Platine eingestellten Temperatur für die Herstellung der intermetallischen Verbindung das Einbrennen der emaillierfähigen Auflage erfolgt, so erreicht man eine Emaillierung, die allen Anforderungen, die das Koch- oder Gargerät im üblichen Gebrauch erfährt, sehr optimal genügt. Insbesondere ist die Emaillierung auch spülmaschinenfest. Überraschenderweise erfährt die Qualität der Emaillierung bei den Maßnahmen zur Herstellung der intermetallischen Verbindung in der Presse keine Qualitätsbeeinträchtigung. Es versteht sich, daß auch die Qualität der intermetallischen Verbindung allen Anforderungen genügt. - Eine typische Temperatur für die Herstellung der intermetallischen Verbindung liegt, wenn die Platine aus einer Aluminiumlegierung besteht, bei etwa 600° C.

Im einzelnen bestehen im Rahmen der Erfindung mehrere Möglichkeiten der weiteren Ausbildung und Gestaltung. So ist eine bevorzugte Ausführungsform der Erfindung dadurch gekennzeichnet, daß mit einer beim Aufbringen wasserfreien emaillierfähigen Auflage gearbeitet wird. Eine andere Ausführungsform der Erfindung ist dadurch gekennzeichnet, daß mit einer emaillierfähigen Auflage auf Basis von wasserhaltigem Dextrin oder Wachs gearbeitet wird. Das Wasser verdunstet. Die Erwärmung auf die vorstehend angegebene Temperatur kann in oxidierender Atmophäre durchgeführt werden. Nach der Lehre der Erfindung kann danach der Mantel und gegebenenfalls ein zum Mantel hin umgebogener Kragenbereich der Kapselabdeckung nach der Abkühlung mit einer weichen, z. B. textilbedeckten Polierscheibe von der Oxidhaut befreit werden, die sich bei dieser Erwärmung auf die vorgegebene Temperatur in einem Wärmeofen gebildet hat, wobei auch die fertige Emaillierung polierend bearbeitet werden kann.

Die erreichten Vorteile sind zusammenfassend darin zu sehen, daß bei Verwirklichung des erfindungsgemäßen Verfahrens einerseits eine allen Beanspruchungen genügende Emaillierung erreicht wird, während andererseits auch sichergestellt ist, daß die intermetallische Verbindung allen Beanspruchungen genügt. Darüber hinaus zeichnet sich das erfindungsgemäße Verfahren durch Einfachheit aus, weil eine besondere Erwärmung für das Einbrennen der Emaillierung entfällt.

## Patentansprüche

1. Verfahren zur Herstellung eines Koch- oder Gargerätes mit
Mantel mit Abdeckplatte oder angeformtem Boden aus nichtrostendem Stahl und
Platine aus gut wärmeleitendem Werkstoff unter dem Topfboden,
wobei das Aggregat aus Boden und Platine zentriert und in einer Schlagpresse mit Stempel und Matrize einer einfachen oder mehrfachen Impulspressung unterworfen sowie dadurch die Platine intermetallisch mit dem Boden verbunden wird, und wobei der Mantel zumindest bereichsweise mit einer dekorativen und/oder technischen, zum Beispiel kennzeichnenden, Emaillierung versehen wird, die als emaillierfähige Auflage auf den Mantel aufgebracht und als Emaille eingebrannt wird, **dadurch** **gekennzeichnet,** daß die emaillierfähige Auflage so ausgewählt wird, daß bei der nach dem Werkstoff der Platine eingestellten Temperatur die Emaillebildung stattfindet, daß die emaillierfähige Auflage auf den gereinigten Mantel aufgebracht wird (ehe die Platine intermetallisch mit dem Boden verbunden wird), daß das Koch- oder Gargerät mit seiner emaillierfähigen Auflage auf die nach dem Werkstoff der Platine eingestellte Temperatur erwärmt wird und daß danach das Aggregat aus Boden und Platine ohne Zwischenabkühlung aus der gleichen Wärme heraus mit der bereits gebildeten dekorativen oder technischen Emaillierung der Impulspressung unterworfen wird.

2. Verfahren nach Anspruch 1, dadurch gekennzeichnet, daß mit einer nach dem Werkstoff der Platine eingestellten Temperatur von etwa 600° C gearbeitet wird.

3. Verfahren nach einem der Ansprüche 1 oder 2, dadurch gekennzeichnet, daß mit einer beim Aufbringen wasserfreien emaillierfähigen Auflage gearbeitet wird.

4. Verfahren nach einem der Ansprüche 1 oder 2, dadurch gekennzeichnet, daß mit einer emaillierfähigen Auflage auf Basis von wasserhaltigen Dextrin oder Wachs gearbeitet wird.

5. Verfahren nach einem der Ansprüche 1 bis 4, dadurch gekennzeichnet, daß die Erwärmung auf die vorstehend angegebene Temperatur in oxidierender Atmosphäre durchgeführt wird, daß der Mantel sowie gegebenenfalls ein zum Mantel hin umgebogener Kragenbereich der Kapselabdeckung bzw. die Platine nach der Abkühlung mit einer weichen Polierscheibe von der Oxidhaut befreit werden, die sich bei der Erwärmung auf die vorgegebene Temperatur gebildet hat und daß dabei auch die Emaillierung polierend bearbeitet wird.

## Claims

1. A process for manufacturing a cooking or boiling utensil having
a convex surface with a cover plate or integrally formed base of stainless steel, and
a bottom plate of a material of good thermal conductivity beneath the pot base,
wherein the aggregate comprising the base and the bottom plate is centred and is subjected to single or multiple impulse pressing in a blow forging press with a punch and die and by this means the bottom plate is intermetallically bonded to the base, and wherein the convex surface is provided at least regionally with a decorative and/or technical, for example distinguishing, enamel coating, which is deposited on the convex surface as an enamel-forming coating and is stoved as an enamel, characterised in that the enamel-forming coating is selected so that enamel formation takes place at the temperature which is set according to the material of the bottom plate, that the enamel-forming coating is deposited on the cleaned convex surface (before the bottom plate is intermetallically bonded to the base), that the cooking or boiling utensil with its enamel-forming coating is heated to the temperature which is set according to the material of the bottom plate, and that thereafter the aggregate comprising the base and the bottom plate, with the decorative or technical enamel coating which has already formed, is subjected to impulse pressing without intermediate cooling from the same heat setting.

2. A process according to claim 1, characterised in that a temperature of about 600°C is employed, which is set according to the material of the bottom plate.

3. A process according to either one of claims 1 or 2, characterised in that an enamel-forming coating is employed which is free from water when deposited.

4. A process according to either one of claims 1 or 2, characterised in that an enamel-forming coating is employed which is based on water-containing dextrin or wax.

5. A process according to any one of claims 1 to 4, characterised in that heating to the above-mentioned temperature is carried out in an oxidising atmosphere, that the convex surface, and optionally a collar region of the encapsulating cover which is bent round towards the convex surface, or the bottom plate, are freed from the oxide film which has formed on heating to the above-mentioned temperature, after cooling, using a soft polishing disc, and that in the course of this procedure the enamel coating is also subjected to a polishing treatment.

## Revendications

1. Procédé de fabrication d'un récipient de cuisson, comprenant une enveloppe avec une plaque de recouvrement ou un fond conformé en acier inoxydable et une platine placée sous le fond du récipient et constituée d'un matériau conducteur de chaleur, l'ensemble constitué par le fond et la platine étant soumis, à l'état centré, dans une presse à frappe avec estampe et matrice, à une compression simple ou multiple par impulsions et la platine étant ainsi solidarisée de manière intermétallique avec le fond, et l'enveloppe étant munie au moins par zones d'un émaillage décoratif et/ou technique, par exemple d'identification, lequel est appliqué sur l'enveloppe sous la forme d'un revêtement émaillable et cuit en tant qu'émail, **caractérisé en ce** que le revêtement émaillable est choisi de telle façon que la formation d'émail se produit à la température réglée en fonction du matériau de la platine, que le revêtement émaillable est appliqué sur l'enveloppe nettoyée (avant la solidarisation intermétallique de la platine avec le fond), que le récipient de cuisson avec son revêtement émaillable est porté à la température réglée en fonction du matériau de la platine et que l'ensemble constitué par le fond et la platine, avec l'émaillage décoratif ou technique déjà réalisé, est ensuite soumis, à la même chaleur, sans refroidissement intermédiaire , à la compression par impulsions.

2. Procédé selon la revendication 1, caractérisé en ce qu'on travaille à une température d'environ 600°C réglée en fonction du matériau de la platine.

3. Procédé selon l'une des revendications 1 ou 2, caractérisé en ce qu'on travaille avec un revêtement émaillable exempt d'eau lors de l'application.

4. Procédé selon l'une des revendications 1 ou 2, caractérisé en ce qu'on travaille avec un revêtement émaillable à base de dextrine ou de cire hydratée.

5. Procédé selon l'une des revendications 1 à 4, caractérisé en ce que l'échauffement à la température précitée est effectué sous atmosphère oxydante, que l'enveloppe ainsi que, le cas échéant, une zone de collet de la capsule de recouvrement et respectivement de la platine, repliée en direction de l'enveloppe, est libérée après le refroidissement de la peau oxydée formée lors de l'échauffement à la température prédéterminée, au moyen d'un disque à polir tendre, et que l'émaillage est alors également soumis à un polissage.
